# EUROPEAN PATENT APPLICATION

(11) **EP 4 580 255 A1**
(43) Date of publication of application: **02.07.2025**
(21) Application number: 24161526.9
(22) Date of filing: 05.03.2024
(51) Int. Cl.: H04W 36/00, H04W 36/08, H04W 36/14, H04W 88/16

(54) **SEAMLESS HANDOVER OF A PROTOCOL DATA UNIT SESSION**

(30) Priority: 29.12.2023 US 202363616387 P; 05.01.2024 US 202418405978
(71) Applicant: Juniper Networks, Inc., Sunnyvale, CA 94089 (US)
(72) Inventor: PADEBETTU, Venkatesh, Sunnyvale, 94089 (US)
(74) Representative: D Young & Co LLP

(57) **Abstract**

A device may receive a handover request to handover a protocol data unit (PDU) session of a network device from a radio access network (RAN) to the device, and may provide, to the RAN, a handover request acknowledgment message acknowledging receipt of the handover request. The device may receive, from the RAN, a sequence number status transfer indicating provision of a handover command by the RAN to the network device, and may receive, from the RAN, uplink data packets and downlink data packets associated with the PDU session. The device may receive, from the network device, a request to establish the PDU session, and may establish the PDU session of the network device based on the request to establish the PDU session.

## Description

### CROSS-REFERENCE TO RELATED APPLICATION

This Patent Application claims priority to U.S. Provisional Patent Application No. 63/616,387, filed on December 29, 2023, entitled "SEAMLESS HANDOVER OF A PROTOCOL DATA UNIT SESSION," and assigned to the assignee hereof. The disclosure of the prior Application is considered part of and is incorporated by reference into this Patent Application.

### BACKGROUND

A network device, such as a dual access fifth generation (5G) residential gateway, may support wireless access to a data network via a radio access network (RAN), and may support wireline access to the data network via an access gateway function (AGF).

### SUMMARY

Some implementations described herein relate to a method. The method may include receiving a handover request to handover a protocol data unit (PDU) session of a network device from a radio access network (RAN) to the device, and providing, to the RAN, a handover request acknowledgment message acknowledging receipt of the handover request. The method may include receiving, from the RAN, a sequence number status transfer indicating provision of a handover command by the RAN to the network device, and receiving, from the RAN, uplink data packets and downlink data packets associated with the PDU session. The method may include receiving, from the network device, a request to establish the PDU session, and establishing the PDU session of the network device based on the request to establish the PDU session.

Some implementations described herein relate to a first device. The first device may include one or more memories and one or more processors. The one or more processors may be configured to receive a handover request to handover a PDU session of a network device from a second device to the first device, and provide, to the second device, a handover request acknowledgment message acknowledging receipt of the handover request. The one or more processors may be configured to receive, from the second device, a sequence number status transfer indicating provision of a handover command by the second device to the network device, and receive, from the second device, uplink data packets and downlink data packets associated with the PDU session. The one or more processors may be configured to receive, from the network device, a request to establish the PDU session, and establish the PDU session of the network device based on the request to establish the PDU session.

Some implementations described herein relate to a computer-readable medium that encodes a set of instructions. The set of instructions, when executed by one or more processors of a first device, may cause the first device to receive a handover request to handover a PDU session of a network device from a second device to the first device, and provide, to the second device, a handover request acknowledgment message acknowledging receipt of the handover request. The set of instructions, when executed by one or more processors of the first device, may cause the first device to receive, from the second device, a sequence number status transfer indicating provision of a handover command by the second device to the network device, and receive, from the second device, uplink data packets and downlink data packets associated with the PDU session. The set of instructions, when executed by one or more processors of the first device, may cause the first device to receive, from the network device, a request to establish the PDU session, and establish the PDU session of the network device based on the request to establish the PDU session. The set of instructions, when executed by one or more processors of the first device, may cause the first device to receive, from the network device, a handover complete message indicating that the handover of the PDU session of the network device from the second device to the first device is complete, and provide the downlink data packets associated with the PDU session to the network device based on receiving the handover complete message. The set of instructions, when executed by one or more processors of the first device, may cause the first device to provide the uplink data packets associated with the PDU session to a user plane function based on receiving the handover complete message.

### BRIEF DESCRIPTION OF THE DRAWINGS

Figs. 1A-1M are diagrams of an example associated with providing seamless handover of a protocol data unit (PDU) session between a wireless network and a wireline network.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for providing seamless handover of a PDU session between a wireless network and a wireline network.

### DETAILED DESCRIPTION

The following detailed description of example implementations refers to the accompanying drawings. The same reference numbers in different drawings may identify the same or similar elements.

A PDU session established via a wireless access (e.g., via a RAN) can be moved to a wireline access (e.g., via an AGF), and vice versa, only by releasing and then reestablishing the PDU session. Due to reconnect, subscriber traffic associated with the PDU session during a transition from one access type to another type will be dropped. An assigned subscriber network address (e.g., an Internet protocol (IP) address) may also change due to the reconnect. Allocated user plane function (UPF) resources may be released and have to be allocated again (e.g., and there is a chance that new UPF is selected). Current standards provide for seamless handover of PDU sessions from one RAN to another RAN, but fail to provide for seamless handover of PDU sessions from an AGF to a RAN and from a RAN to an AGF. This causes a network device (e.g., a residential gateway) to reconnect (e.g., with loss of subscriber traffic) and results in multiple changes in a network.

Thus, current techniques for providing handover of PDU sessions between an AGF and a RAN consume computing resources (e.g., processing resources, memory resources, communication resources, and/or the like), networking resources, and/or other resources associated with failing to provide seamless handover of PDU sessions between the AGF and the RAN, handling lost subscriber traffic based on failing to provide seamless handover of the PDU sessions, causing multiple changes in a network due to releasing and reestablishing PDU sessions during handover, and/or the like.

Some implementations described herein provide a device (e.g., an AGF) that provides seamless handover of a PDU session between a wireless network and a wireline network. For example, the device may receive a handover request to handover a protocol data unit (PDU) session of a network device from a radio access network (RAN) to the device, and may provide, to the RAN, a handover request acknowledgment message acknowledging receipt of the handover request. The device may receive, from the RAN, a sequence number status transfer indicating provision of a handover command by the RAN to the network device, and may receive, from the RAN, uplink data packets and downlink data packets associated with the PDU session. The device may receive, from the network device, a request to establish the PDU session, and may establish the PDU session of the network device based on the request to establish the PDU session.

In this way, the AGF provides seamless handover of a PDU session between a wireless network and a wireline network. For example, a seamless handover of a PDU session between wireless access (e.g., a RAN) and wireline access (e.g., the AGF) may be provided. The AGF may support a protocol (e.g., an Xn application protocol (XnAP) or a next generation application protocol (NGAP) specific to session and service continuity (SSC) mode 3) that enables handover of a PDU session from a RAN to an AGF and from an AGF to a RAN. The AGF may utilize additional messages (e.g., a handover request, a handover command, a handover complete, and/or the like) so that a network device (e.g., a residential gateway) may communicate with the AGF during a handover procedure. The AGF may include buffering and support for an end marker packet (e.g., a last packet to be transmitted during a handover) to provide a lossless handover. Thus, the AGF may conserve computing resources, networking resources, and/or other resources that would have otherwise been consumed by failing to provide seamless handover of PDU sessions between the AGF and the RAN, handling lost subscriber traffic based on failing to provide seamless handover of the PDU sessions, causing multiple changes in a network due to releasing and reestablishing PDU sessions during handover, and/or the like.

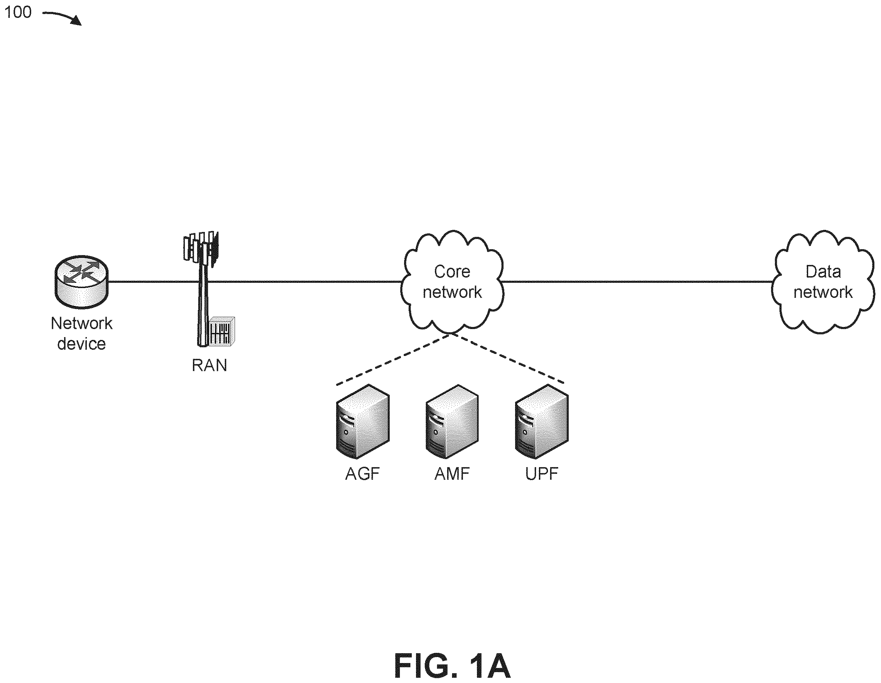

Figs. 1A-1M are diagrams of an example 100 associated with providing seamless handover of a PDU session between a wireless network and a wireline network. As shown in Figs. 1A-1M, the example 100 includes a network device, a radio access network (RAN), a data network, and a core network that includes an access gateway function, an access and mobility management function (AMF), and a user plane function (UPF). Further details of the network device, the RAN, the core network, AGF, the AMF, UPF, and the data network are provided elsewhere herein.

As shown in Fig. 1A, the network device may utilize the RAN to communicate with the core network and to further communicate with the data network, via the core network. Although a single network device, RAN, core network, AGF, AMF, UPF, and data network are depicted in Fig. 1A, in some implementations, more than one network device, RAN, core network, AGF, AMF, UPF, and data network may be provided. Furthermore, although implementations are described in connection with a fifth generation (5G) core network, the implementations may be utilized with other types of core networks, such as a fourth generation (4G) core network.

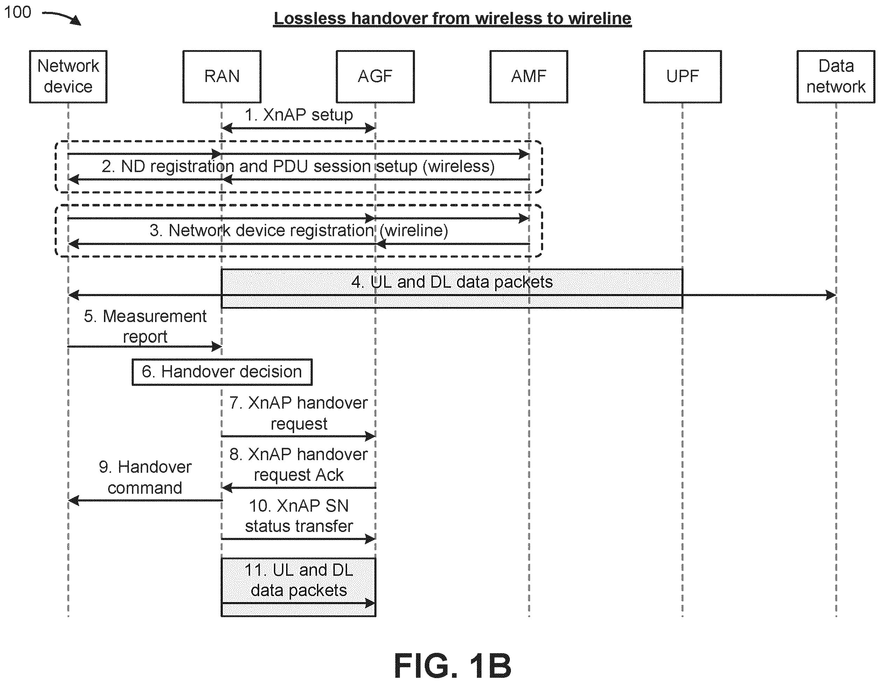

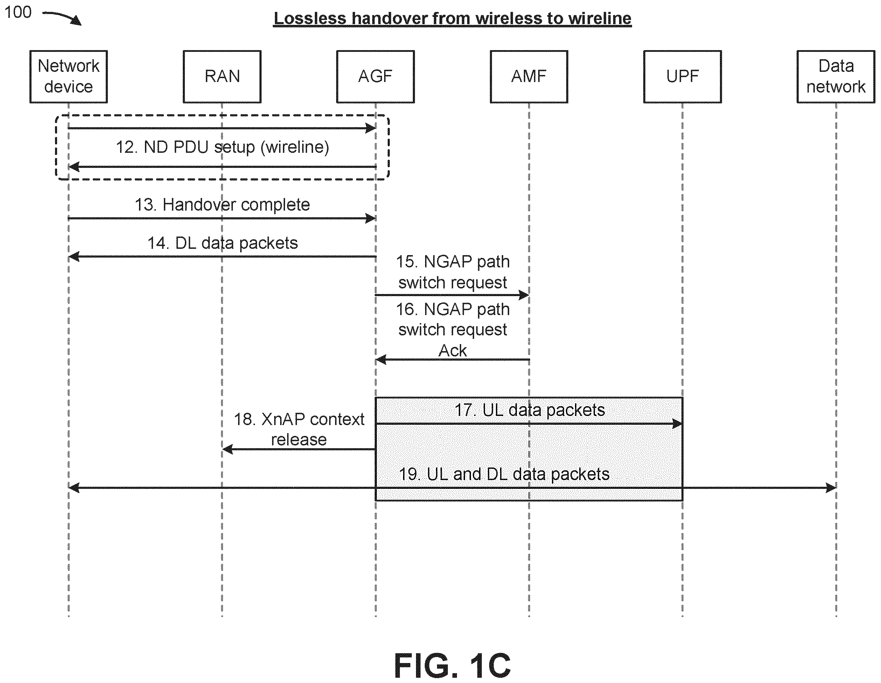

Figs. 1B and 1C depict a message flow diagram associated with utilizing XnAP for lossless handover from a wireless network to a wireline network. As shown at step 1 of Fig. 1B, the RAN and the AGF may perform an XnAP setup procedure to enable utilization of XnAP for the message flows. As shown at step 2, the network device (ND) may interact with the RAN and the AMF to perform a wireless network device registration and a wireless PDU session setup for the network device. For example, the network device may register for a wireless PDU session via the RAN and the AMF. The RAN and the AMF may register the network device and may establish the wireless PDU session for the network device. As shown at step 3, the network device may interact with the AGF and the AMF to perform a wireline network device registration.

As shown at step 4 of Fig. 1B, the network device may exchange uplink (UL) and downlink (DL) data packets with the data network. For example, once the wireless PDU session is established, the network device may exchange the UL and the DL data packets with the data network. As shown at step 5, the network device may provide a measurement report to the RAN. The measurement report may include information indicating a state of the wireless PDU session (e.g., a degraded state, a good state, an excellent state, and/or the like). As shown at step 6, the RAN may make a handover decision for the network device based on the measurement report. For example, if the measurement report indicates that the wireless PDU session is degraded, the handover decision may be to handover the wireless PDU session to the wireline network. In another example, if the measurement report indicates that the wireless PDU session is not degraded, the handover decision may be to maintain the wireless PDU session.

As shown at step 7 of Fig. 1B, the RAN may provide an XnAP handover request to the AGF. For example, the RAN may generate the XnAP handover request based on determining that the wireless PDU session is to be handed over to the wireline network (e.g., the handover decision). The XnAP handover request may include a request to handover the wireless PDU session to the wireline network (e.g., to the AGF). As shown at step 8, the AGF may provide an XnAP handover request acknowledgment (Ack) to the RAN. For example, if the AGF agrees to accept the XnAP handover request from the RAN, the AGF may generate the XnAP handover request acknowledgment. The XnAP handover request acknowledgment may indicate that the AGF will accept the handover of the wireless PDU session to the AGF. As shown at step 9, the RAN may provide a handover command to the network device. For example, when the RAN receives the XnAP handover request acknowledgment, the RAN may generate the handover command. The handover command may include information instructing the network device to handover the wireless PDU session to the AGF. As shown at step 10, the RAN may provide an XnAP sequence number (SN) status transfer message to the AGF. The XnAP SM status transfer message may include information indicating a status of the transfer of the wireless PDU session from the RAN. As shown at step 11, the RAN may provide UL and DL data packets associated with the wireless PDU session to the AGF. The UL and DL data packets may include UL data packets not yet received by the data network and DL data packets not yet received by the network device.

As shown at step 12 of Fig. 1C, the network device may interact with the AGF to perform a wireline PDU session setup for the network device. For example, the network device may request establishment of the wireline PDU session from the AGF, and the AGF may establish the wireline PDU session based on the request. As shown at step 13, the network device may provide a handover complete message to the AGF. The handover complete message may indicate that the handover of the wireless PDU session to the wireline PDU session is complete. As shown at step 14, the AGF may provide the DL data packets (e.g., received from the RAN and yet to be received by the network device) to the network device. As shown at step 15, the AGF may provide an NGAP path switch request to the AMF. The NGAP path switch request may include a request to switch the path of the PDU session from wireless to wireline.

As shown at step 16 of Fig. 1C, the AMF may provide an NGAP path switch request acknowledgment to the AGF. The NGAP path switch request acknowledgment may indicate that the AMF approved the request to switch the path of the PDU session from wireless to wireline. As shown at step 17, the AGF may provide the UL data packets (e.g., received from the RAN and yet to be received by the data network) to the UPF. As shown at step 18, the AGF may provide an XnAP context release message to the RAN. The XnAP context release message may indicate that the RAN may release context associated with the wireless PDU session. As shown at step 19, the network device may exchange UL and DL data packets with the data network. For example, once the wireline PDU session is established, the network device may exchange the UL and the DL data packets with the data network.

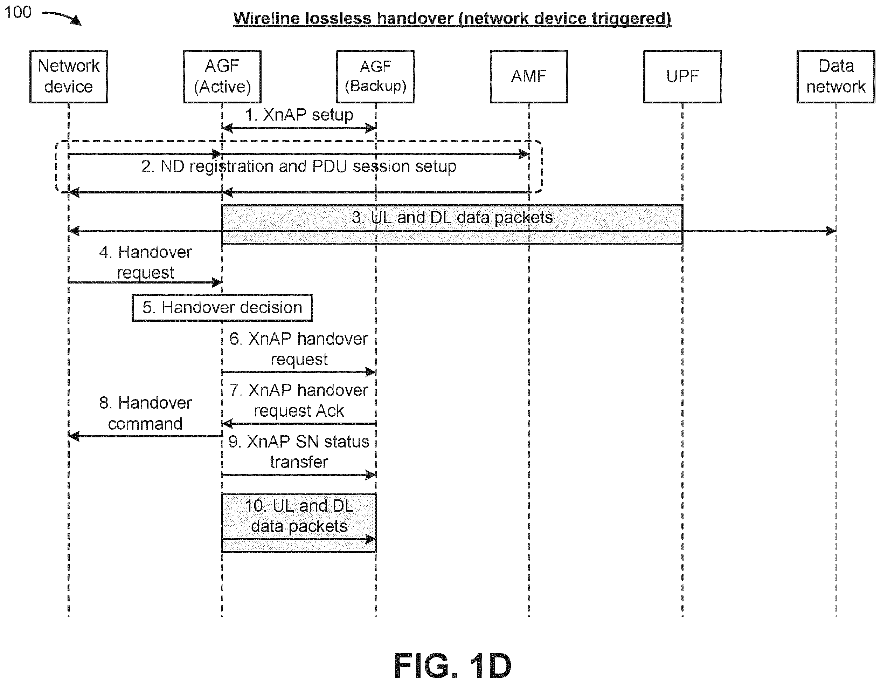

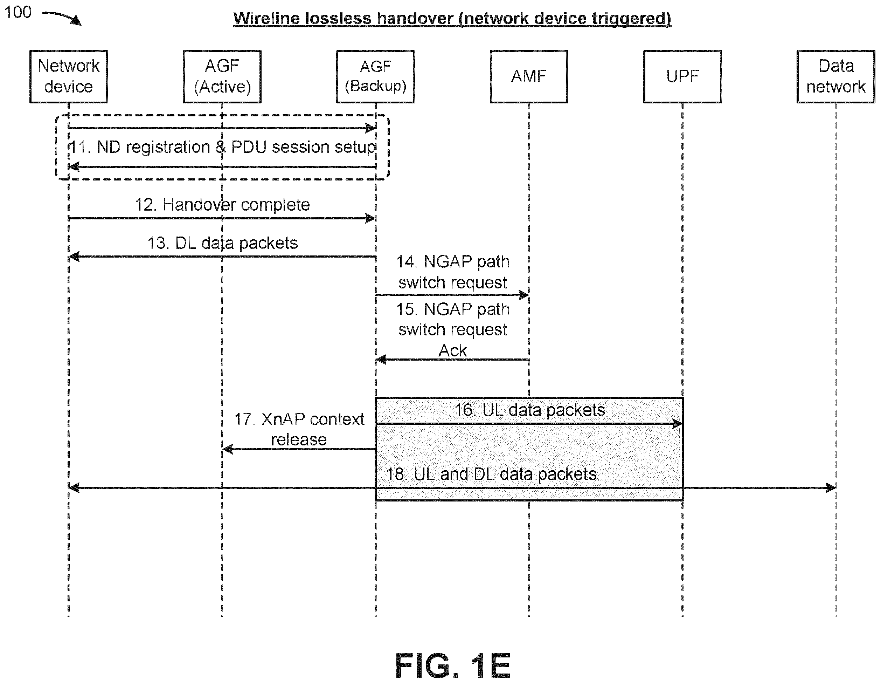

Figs. 1D and 1E depict a message flow diagram associated with utilizing XnAP for wireline lossless handover when triggered by the network device. As shown at step 1 of Fig. 1D, an active AGF and a backup AGF may perform an XnAP setup procedure to enable utilization of XnAP for the message flows. As shown at step 2, the network device may interact with the active AGF and the AMF to perform a wireline network device registration and a wireline PDU session setup for the network device. For example, the network device may register for a wireline PDU session via the active AGF and the AMF. The active AGF and the AMF may register the network device and may establish the wireline PDU session for the network device. As shown at step 3, the network device may exchange uplink (UL) and downlink (DL) data packets with the data network. For example, once the wireline PDU session is established, the network device may exchange the UL and the DL data packets with the data network. As shown at step 4, the network device may provide a handover request to the active AGF. The handover request may include a request to handover the wireline PDU session from the active AGF to the backup AGF. As shown at step 5, the active AGF may make a handover decision for the network device based on the handover request. For example, the handover decision may be to handover the wireline PDU session from the active AGF to the backup AGF.

As shown at step 6 of Fig. 1D, the active AGF may provide an XnAP handover request to the backup AGF. For example, the active AGF may generate the XnAP handover request based on determining that the wireline PDU session is to be handed over to the backup AGF (e.g., the handover decision). The XnAP handover request may include a request to handover the wireline PDU session from the active AGF to the backup AGF. As shown at step 7, the backup AGF may provide an XnAP handover request acknowledgment (Ack) to the active AGF. For example, if the backup AGF agrees to accept the XnAP handover request from the active AGF, the backup AGF may generate the XnAP handover request acknowledgment. The XnAP handover request acknowledgment may indicate that the backup AGF will accept the handover of the wireline PDU session to the backup AGF. As shown at step 8, the active AGF may provide a handover command to the network device. For example, when the active AGF receives the XnAP handover request acknowledgment, the active AGF may generate the handover command. The handover command may include information instructing the network device to handover the wireline PDU session to the backup AGF. As shown at step 9, the active AGF may provide an XnAP sequence number (SN) status transfer message to the backup AGF. The XnAP SM status transfer message may include information indicating a status of the transfer of the wireline PDU session from the active AGF. As shown at step 10, the active AGF may provide UL and DL data packets associated with the wireline PDU session to the backup AGF. The UL and DL data packets may include UL data packets not yet received by the data network and DL data packets not yet received by the network device.

As shown at step 11 of Fig. 1E, the network device may interact with the backup AGF to perform a wireline PDU session setup for the network device. For example, the network device may request establishment of the wireline PDU session from the backup AGF, and the backup AGF may establish the wireline PDU session based on the request. As shown at step 12, the network device may provide a handover complete message to the backup AGF. The handover complete message may indicate that the handover of the wireline PDU session is complete. As shown at step 13, the backup AGF may provide the DL data packets (e.g., received from the active AGF and yet to be received by the network device) to the network device. As shown at step 14, the backup AGF may provide an NGAP path switch request to the AMF. The NGAP path switch request may include a request to switch the path of the PDU session from the active AGF to the backup AGF.

As shown at step 15 of Fig. 1E, the AMF may provide an NGAP path switch request acknowledgment to the backup AGF. The NGAP path switch request acknowledgment may indicate that the AMF approved the request to switch the path of the PDU session from the active AGF to the backup AGF. As shown at step 16, the backup AGF may provide the UL data packets (e.g., received from the active AGF and yet to be received by the data network) to the UPF. As shown at step 17, the backup AGF may provide an XnAP context release message to the active AGF. The XnAP context release message may indicate that the active AGF may release context associated with the wireline PDU session. As shown at step 18, the network device may exchange UL and DL data packets with the data network. For example, once the wireline PDU session is established, the network device may exchange the UL and the DL data packets with the data network.

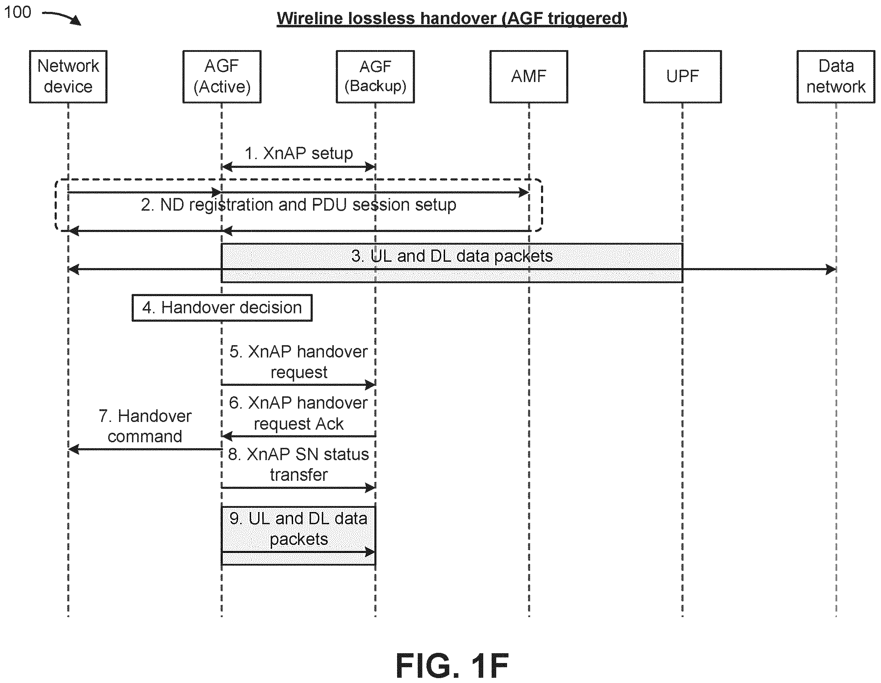

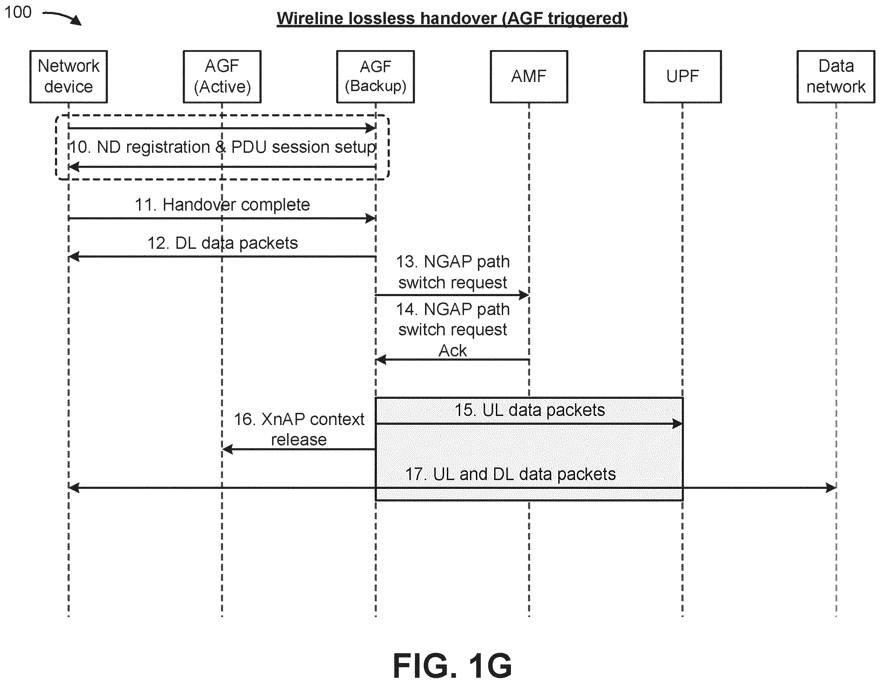

Figs. 1F and 1G depict a message flow diagram associated with utilizing XnAP for wireline lossless handover when triggered by the AGF. As shown at step 1 of Fig. 1F, an active AGF and a backup AGF may perform an XnAP setup procedure to enable utilization of XnAP for the message flows. As shown at step 2, the network device may interact with the active AGF and the AMF to perform a wireline network device registration and a wireline PDU session setup for the network device. For example, the network device may register for a wireline PDU session via the active AGF and the AMF. The active AGF and the AMF may register the network device and may establish the wireline PDU session for the network device. As shown at step 3, the network device may exchange UL and DL data packets with the data network. For example, once the wireline PDU session is established, the network device may exchange the UL and the DL data packets with the data network. As shown at step 4, the active AGF may make a handover decision for the network device. For example, the handover decision may be to handover the wireline PDU session from the active AGF to the backup AGF.

As shown at step 5 of Fig. 1F, the active AGF may provide an XnAP handover request to the backup AGF. For example, the active AGF may generate the XnAP handover request based on determining that the wireline PDU session is to be handed over to the backup AGF (e.g., the handover decision). The XnAP handover request may include a request to handover the wireline PDU session from the active AGF to the backup AGF. As shown at step 6, the backup AGF may provide an XnAP handover request acknowledgment (Ack) to the active AGF. For example, if the backup AGF agrees to accept the XnAP handover request from the active AGF, the backup AGF may generate the XnAP handover request acknowledgment. The XnAP handover request acknowledgment may indicate that the backup AGF will accept the handover of the wireline PDU session to the backup AGF. As shown at step 7, the active AGF may provide a handover command to the network device. For example, when the active AGF receives the XnAP handover request acknowledgment, the active AGF may generate the handover command. The handover command may include information instructing the network device to handover the wireline PDU session to the backup AGF. As shown at step 8, the active AGF may provide an XnAP SN status transfer message to the backup AGF. The XnAP SM status transfer message may include information indicating a status of the transfer of the wireline PDU session from the active AGF. As shown at step 9, the active AGF may provide UL and DL data packets associated with the wireline PDU session to the backup AGF. The UL and DL data packets may include UL data packets not yet received by the data network and DL data packets not yet received by the network device.

As shown at step 10 of Fig. 1G, the network device may interact with the backup AGF to perform a wireline PDU session setup for the network device. For example, the network device may request establishment of the wireline PDU session from the backup AGF, and the backup AGF may establish the wireline PDU session based on the request. As shown at step 11, the network device may provide a handover complete message to the backup AGF. The handover complete message may indicate that the handover of the wireline PDU session is complete. As shown at step 12, the backup AGF may provide the DL data packets (e.g., received from the active AGF and yet to be received by the network device) to the network device. As shown at step 13, the backup AGF may provide an NGAP path switch request to the AMF. The NGAP path switch request may include a request to switch the path of the PDU session from the active AGF to the backup AGF.

As shown at step 14 of Fig. 1G, the AMF may provide an NGAP path switch request acknowledgment to the backup AGF. The NGAP path switch request acknowledgment may indicate that the AMF approved the request to switch the path of the PDU session from the active AGF to the backup AGF. As shown at step 15, the backup AGF may provide the UL data packets (e.g., received from the active AGF and yet to be received by the data network) to the UPF. As shown at step 16, the backup AGF may provide an XnAP context release message to the active AGF. The XnAP context release message may indicate that the active AGF may release context associated with the wireline PDU session. As shown at step 17, the network device may exchange UL and DL data packets with the data network. For example, once the wireline PDU session is established, the network device may exchange the UL and the DL data packets with the data network.

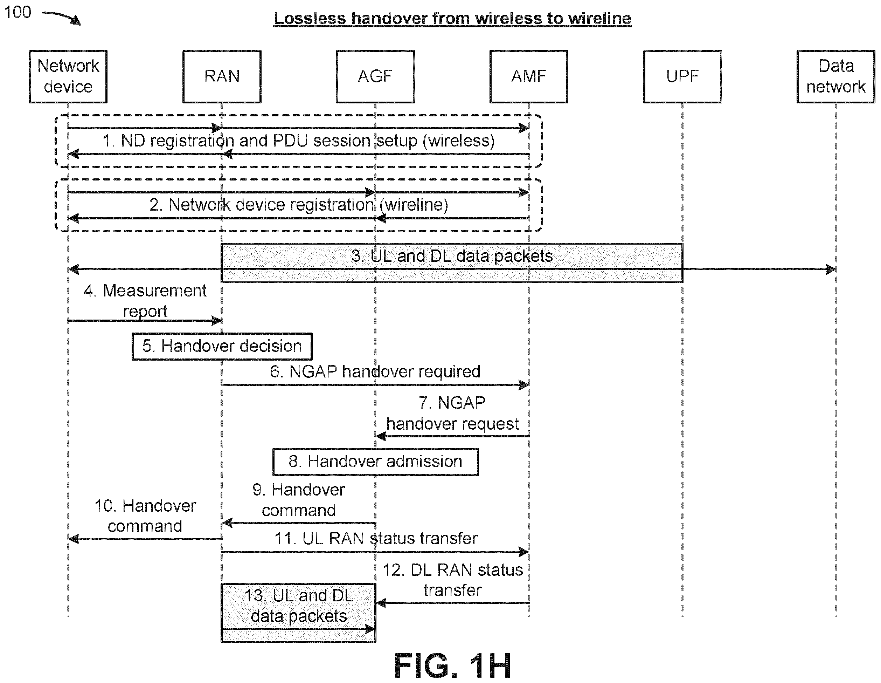

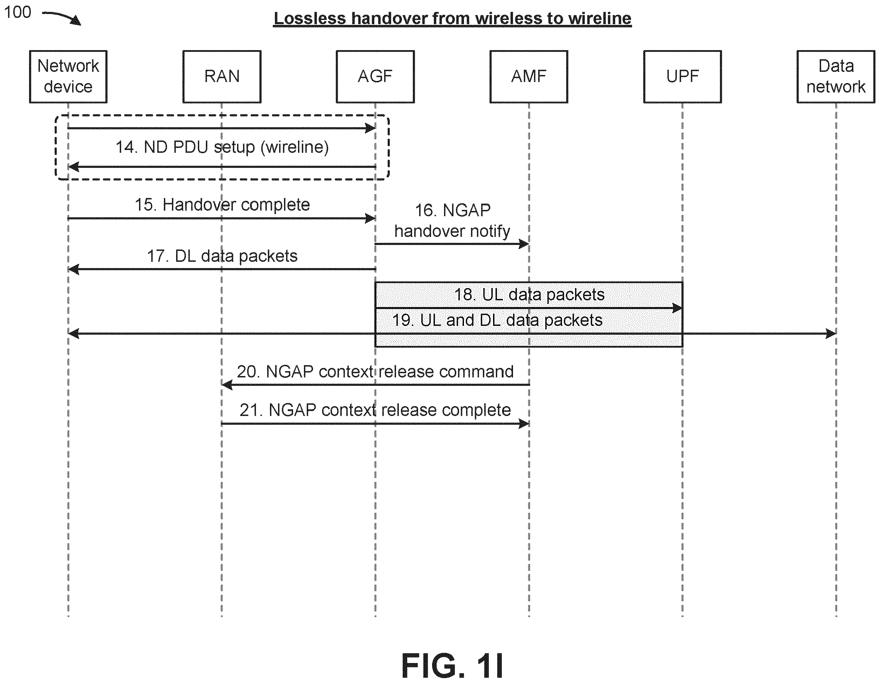

Figs. 1H and 1I depict a message flow diagram associated with utilizing NGAP for lossless handover from a wireless network to a wireline network. As shown at step 1 of Fig. 1H, the network device (ND) may interact with the RAN and the AMF to perform a wireless network device registration and a wireless PDU session setup for the network device. For example, the network device may register for a wireless PDU session via the RAN and the AMF. The RAN and the AMF may register the network device and may establish the wireless PDU session for the network device. As shown at step 2, the network device may interact with the AGF and the AMF to perform a wireline network device registration. As shown at step 3, the network device may exchange UL and DL data packets with the data network. For example, once the wireless PDU session is established, the network device may exchange the UL and the DL data packets with the data network.

As shown at step 4 of Fig. 1H, the network device may provide a measurement report to the RAN. The measurement report may include information indicating a state of the wireless PDU session (e.g., a degraded state, a good state, an excellent state, and/or the like). As shown at step 5, the RAN may make a handover decision for the network device based on the measurement report. For example, if the measurement report indicates that the wireless PDU session is degraded, the handover decision may be to handover the wireless PDU session to the wireline network. In another example, if the measurement report indicates that the wireless PDU session is not degraded, the handover decision may be to maintain the wireless PDU session.

As shown at step 6 of Fig. 1H, the RAN may provide an NGAP handover required message to the AMF. For example, the RAN may generate the NGAP handover required message based on determining that the wireless PDU session is to be handed over to the wireline network (e.g., the handover decision). As shown at step 7, the AMF may provide an NGAP handover request to the AGF. For example, the AMF may generate the NGAP handover request based on receiving the NGAP handover required message from the RAN. The NGAP handover request may include a request to handover the wireless PDU session to the wireline network (e.g., to the AGF). As shown at step 8, the AGF may perform a handover admission process that determines whether to handover the wireless PDU session to the wireline network. As shown at step 9, if the AGF determines to handover the wireless PDU session to the wireline network (e.g., in the handover admission process), the AGF may provide a handover command to the RAN. The handover command may include information instructing the RAN to handover the wireless PDU session to the AGF.

As shown at step 10 of Fig. 1H, the RAN may provide a handover command to the network device. For example, when the RAN receives the handover command from the AGF, the RAN may generate the handover command or may utilize the handover command generated by the AGF. The handover command may include information instructing the network device to handover the wireless PDU session to the AGF. As shown at step 11, the RAN may provide an XnAP sequence number (SN) status transfer message to the AGF. The XnAP SN status transfer message may include information indicating a status of the transfer of the wireless PDU session from the RAN. As shown at step 11, the RAN may provide UL and DL data packets associated with the wireless PDU session to the AGF. The UL and DL data packets may include UL data packets not yet received by the data network and DL data packets not yet received by the network device.

As shown at step 14 of Fig. 1I, the network device may interact with the AGF to perform a wireline PDU session setup for the network device. For example, the network device may request establishment of the wireline PDU session from the AGF, and the AGF may establish the wireline PDU session based on the request. As shown at step 15, the network device may provide a handover complete message to the AGF. The handover complete message may indicate that the handover of the wireless PDU session to the wireline PDU session is complete. As shown at step 16, the AGF may provide an NGAP handover notify message to the AMF. The NGAP notify message may notify the AMF that the handover of the wireless PDU session to the wireline PDU session is complete.

As shown at step 17 of Fig. 1I, the AGF may provide the DL data packets (e.g., received from the RAN and yet to be received by the network device) to the network device. As shown at step 18, the AGF may provide the UL data packets (e.g., received from the RAN and yet to be received by the data network) to the UPF. As shown at step 19, the network device may exchange UL and DL data packets with the data network. For example, once the wireline PDU session is established, the network device may exchange the UL and the DL data packets with the data network. As shown at step 20, the AMF may provide an NGAP context release command to the RAN. The NGAP context release command may instruct the RAN to release context associated with the wireless PDU session. As shown at step 21, the RAN may provide an NGAP context release complete message to the AMF. The NGAP context release complete message may indicate that the RAN released the context associated with the wireless PDU session.

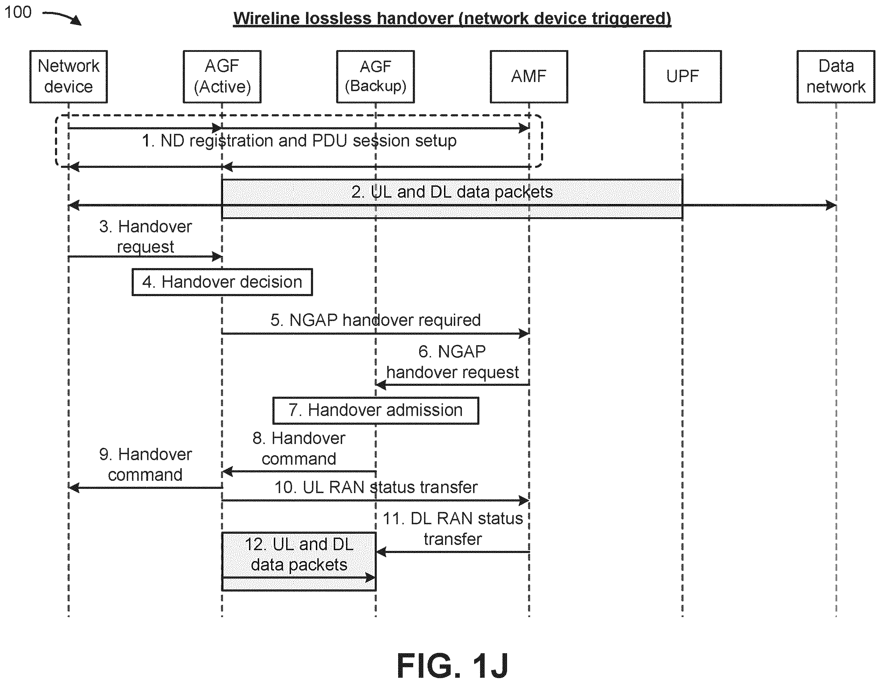

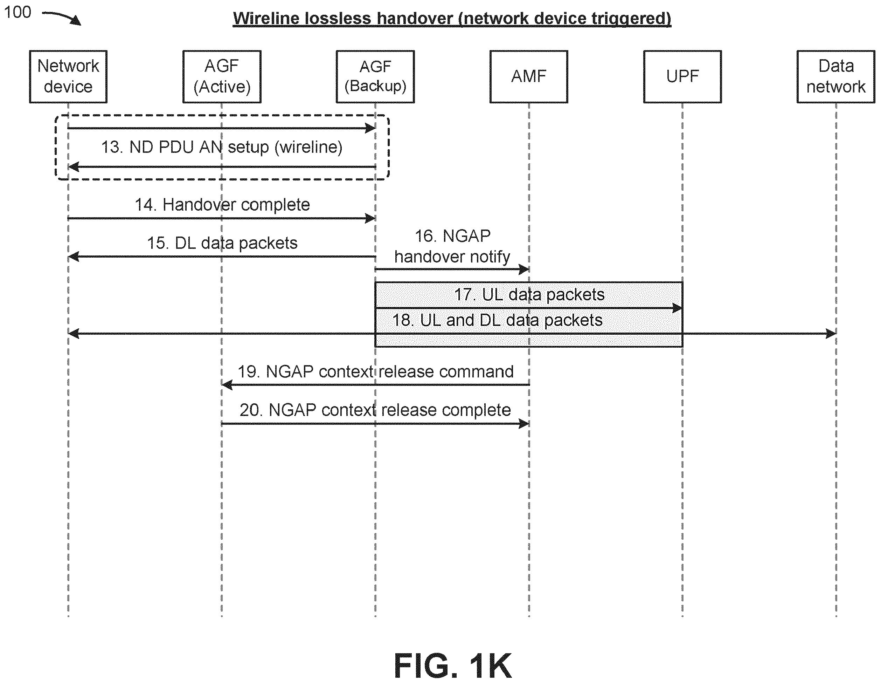

Figs. 1J and 1K depict a message flow diagram associated with utilizing NGAP for wireline lossless handover when triggered by the network device. As shown at step 1 of Fig. 1J, the network device may interact with an active AGF and the AMF to perform a wireline network device registration and a wireline PDU session setup for the network device. For example, the network device may register for a wireline PDU session via the active AGF and the AMF. The active AGF and the AMF may register the network device and may establish the wireline PDU session for the network device. As shown at step 2, the network device may exchange UL and DL data packets with the data network. For example, once the wireline PDU session is established, the network device may exchange the UL and the DL data packets with the data network. As shown at step 3, the network device may provide a handover request to the active AGF. The handover request may include a request to handover the wireline PDU session from the active AGF to the backup AGF. As shown at step 4, the active AGF may make a handover decision for the network device based on the handover request. For example, the handover decision may be to handover the wireline PDU session from the active AGF to the backup AGF.

As shown at step 5 of Fig. 1J, the active AGF may provide an NGAP handover required message to the backup AMF. For example, the active AGF may generate the NGAP handover required message based on determining that the wireline PDU session is to be handed over from the active AGF to the backup AGF (e.g., the handover decision). As shown at step 6, the AMF may provide an NGAP handover request to the backup AGF. For example, the AMF may generate the NGAP handover request based on receiving the NGAP handover required message from the active AGF. The NGAP handover request may include a request to handover the wireline PDU session from the active AGF to the backup AGF. As shown at step 7, the backup AGF may perform a handover admission process that determines whether to handover the wireline PDU session from the active AGF to the backup AGF. As shown at step 8, if the backup AGF determines to handover the wireline PDU session from the active AGF to the backup AGF (e.g., in the handover admission process), the backup AGF may provide a handover command to the active AGF. The handover command may include information instructing the active AGF to handover the wireline PDU session from the active AGF to the backup AGF.

As shown at step 9 of Fig. 1H, the active AGF may provide a handover command to the network device. For example, when the active AGF receives the handover command from the backup AGF, the active AGF may generate the handover command or may utilize the handover command generated by the backup AGF. The handover command may include information instructing the network device to handover the wireline PDU session from the active AGF to the backup AGF. As shown at step 10, the active AGF may provide a UL RAN status transfer message to the AMF. The UL RAN status transfer message may include information indicating a status of the transfer of UL data of the wireline PDU session from the active AGF to the backup AGF. As shown at step 11, the AMF may provide a DL RAN status transfer message to the backup AGF. The DL RAN status transfer message may include information indicating a status of the transfer of DL data of the wireline PDU session from the active AGF to the backup AGF. As shown at step 12, the active AGF may provide UL and DL data packets associated with the wireless PDU session to the backup AGF. The UL and DL data packets may include UL data packets not yet received by the data network and DL data packets not yet received by the network device.

As shown at step 13 of Fig. 1K, the network device may interact with the backup AGF to perform a wireline PDU session setup for the network device. For example, the network device may request establishment of the wireline PDU session from the backup AGF, and the backup AGF may establish the wireline PDU session based on the request. As shown at step 14, the network device may provide a handover complete message to the backup AGF. The handover complete message may indicate that the handover of the wireline PDU session from the active AGF to the backup AGF is complete. As shown at step 15, the backup AGF may provide the DL data packets (not yet received by the network device) to the network device. As shown at step 16, the backup AGF may provide an NGAP handover notify message to the AMF. The NGAP notify message may notify the AMF that the handover of the wireline PDU session from the active AGF to the backup AGF is complete.

As shown at step 17 of Fig. 1I, the AGF may provide the UL data packets (e.g., not yet to be received by the data network) to the UPF. As shown at step 18, the network device may exchange UL and DL data packets with the data network. For example, once the wireline PDU session is established with the backup AGF, the network device may exchange the UL and the DL data packets with the data network. As shown at step 19, the AMF may provide an NGAP context release command to the active AGF. The NGAP context release command may instruct the active AGF to release context associated with the wireless PDU session. As shown at step 20, the active AGF may provide an NGAP context release complete message to the AMF. The NGAP context release complete message may indicate that the active AGF released the context associated with the wireline PDU session.

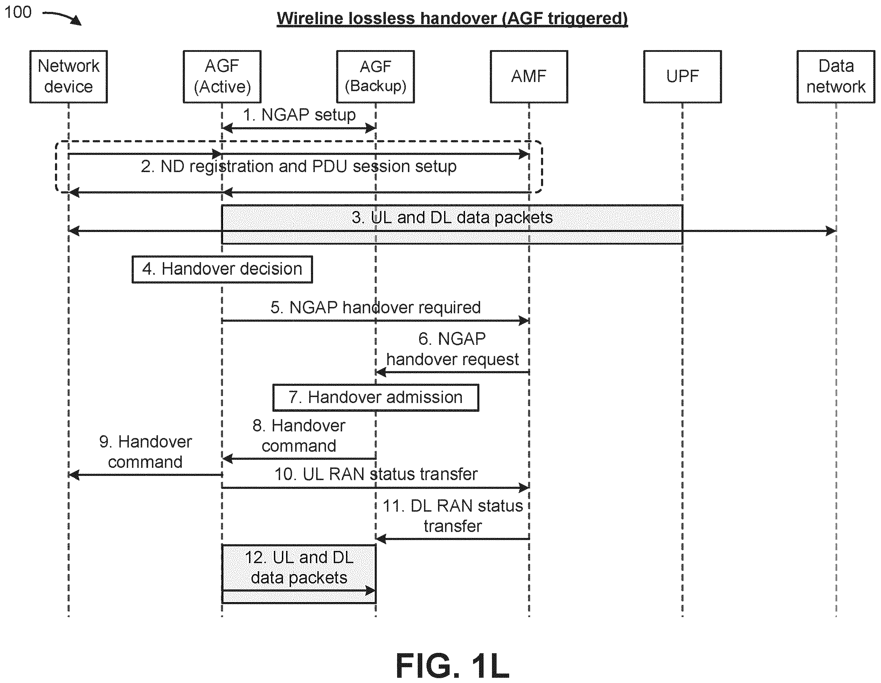

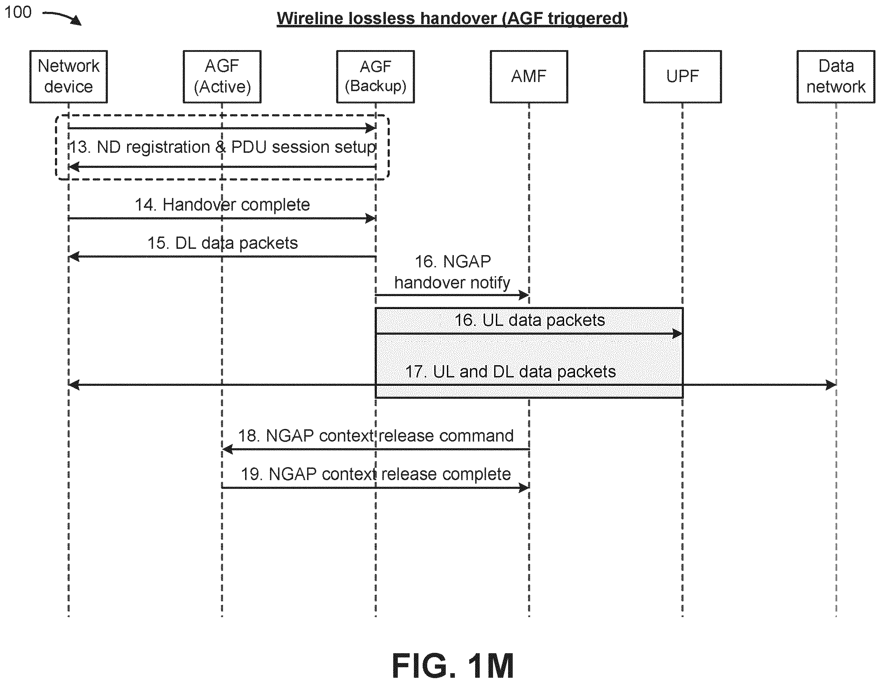

Figs. 1L and 1M depict a message flow diagram associated with utilizing NGAP for wireline lossless handover when triggered by the AGF. As shown at step 1 of Fig. 1L, an active AGF and a backup AGF may perform an NGAP setup procedure to enable utilization of NGAP for the message flows. As shown at step 2, the network device may interact with the active AGF and the AMF to perform a wireline network device registration and a wireline PDU session setup for the network device. For example, the network device may register for a wireline PDU session via the active AGF and the AMF. The active AGF and the AMF may register the network device and may establish the wireline PDU session for the network device. As shown at step 3, the network device may exchange UL and DL data packets with the data network. For example, once the wireline PDU session is established, the network device may exchange the UL and the DL data packets with the data network. As shown at step 4, the active AGF may make a handover decision for the network device. For example, the handover decision may be to handover the wireline PDU session from the active AGF to the backup AGF.

As shown at step 5 of Fig. 1F, the active AGF may provide an NGAP handover required message to the AMF. For example, the active RAN may generate the NGAP handover required message based on determining that the wireline PDU session is to be handed over from the active AGF to the backup AGF (e.g., the handover decision). As shown at step 6, the AMF may provide an NGAP handover request to the backup AGF. For example, the AMF may generate the NGAP handover request based on receiving the NGAP handover required message from the active AGF. The NGAP handover request may include a request to handover the wireline PDU session from the active AGF to the backup AGF. As shown at step 7, the backup AGF may perform a handover admission process that determines whether to handover the wireline PDU session from the active AGF to the backup AGF.

As shown at step 8, the backup AGF may provide a handover command to the active AGF. For example, the backup AGF may generate the handover command based on the handover admission process determining to handover the wireline PDU session from the active AGF to the backup AGF. As shown at step 9, the active AGF may provide a handover command to the network device. For example, when the active AGF receives the handover command from the backup AGF, the active AGF may generate the handover command or may forward the handover command to the network device. The handover command may include information instructing the network device to handover the wireline PDU session from the active AGF to the backup AGF. As shown at step 10, the active AGF may provide a UL RAN status transfer message to the AMF. The UL RAN status transfer message may include information indicating a status of the transfer of UL data of the wireline PDU session from the active AGF to the backup AGF. As shown at step 11, the AMF may provide a DL RAN status transfer message to the backup AGF. The DL RAN status transfer message may include information indicating a status of the transfer of DL data of the wireline PDU session from the active AGF to the backup AGF. As shown at step 12, the active AGF may provide UL and DL data packets associated with the wireline PDU session to the backup AGF. The UL and DL data packets may include UL data packets not yet received by the data network and DL data packets not yet received by the network device.

As shown at step 13 of Fig. 1M, the network device may interact with the backup AGF to perform a network device registration and a wireline PDU session setup for the network device. For example, the network device may request establishment of the wireline PDU session from the backup AGF, and the backup AGF may establish the wireline PDU session based on the request. As shown at step 14, the network device may provide a handover complete message to the backup AGF. The handover complete message may indicate that the handover of the wireline PDU session is complete. As shown at step 15, the backup AGF may provide the DL data packets (e.g., received from the active AGF and yet to be received by the network device) to the network device. As shown at step 16, the backup AGF may provide an NGAP handover notify message to the AMF. The NGAP handover notify message may include a request to switch the PDU session from the active AGF to the backup AGF.

As shown at step 16 of Fig. 1M, the backup AGF may provide the UL data packets (e.g., received from the active AGF and yet to be received by the data network) to the UPF. As shown at step 17, the network device may exchange UL and DL data packets with the data network. For example, once the wireline PDU session is established, the network device may exchange the UL and the DL data packets with the data network. As shown at step 18, the AMF may provide an NGAP context release command to the active AGF. The NGAP context release command may instruct the active AGF to release context associated with the wireline PDU session. As shown at step 19, the active AGF may provide an NGAP context release complete message to the AMF. The NGAP context release complete message may indicate that the active AGF released the context associated with the wireline PDU session.

In this way, the AGF provides seamless handover of a PDU session between a wireless network and a wireline network. For example, a seamless handover of a PDU session between wireless access (e.g., a RAN) and wireline access (e.g., the AGF) may be provided. The AGF may support a protocol (e.g., an XnAP or an NGAP specific to SSC mode 3) that enables handover of a PDU session from a RAN to an AGF and from an AGF to a RAN. The AGF may utilize additional messages (e.g., a handover request, a handover command, a handover complete, and/or the like) so that a network device (e.g., a residential gateway) may communicate with the AGF during a handover procedure. The AGF may include buffering and support for an end marker packet (e.g., a last packet to be transmitted during a handover) to provide a lossless handover. Thus, the AGF may conserve computing resources, networking resources, and/or other resources that would have otherwise been consumed by failing to provide seamless handover of PDU sessions between the AGF and the RAN, handling lost subscriber traffic based on failing to provide seamless handover of the PDU sessions, causing multiple changes in a network due to releasing and reestablishing PDU sessions during handover, and/or the like.

As indicated above, Figs. 1A-1M are provided as an example. Other examples may differ from what is described with regard to Figs. 1A-1M. The number and arrangement of devices shown in Figs. 1A-1M are provided as an example. In practice, there may be additional devices, fewer devices, different devices, or differently arranged devices than those shown in Figs. 1A-1M. Furthermore, two or more devices shown in Figs. 1A-1M may be implemented within a single device, or a single device shown in Figs. 1A-1M may be implemented as multiple, distributed devices. Additionally, or alternatively, a set of devices (e.g., one or more devices) shown in Figs. 1A-1M may perform one or more functions described as being performed by another set of devices shown in Figs. 1A-1M.

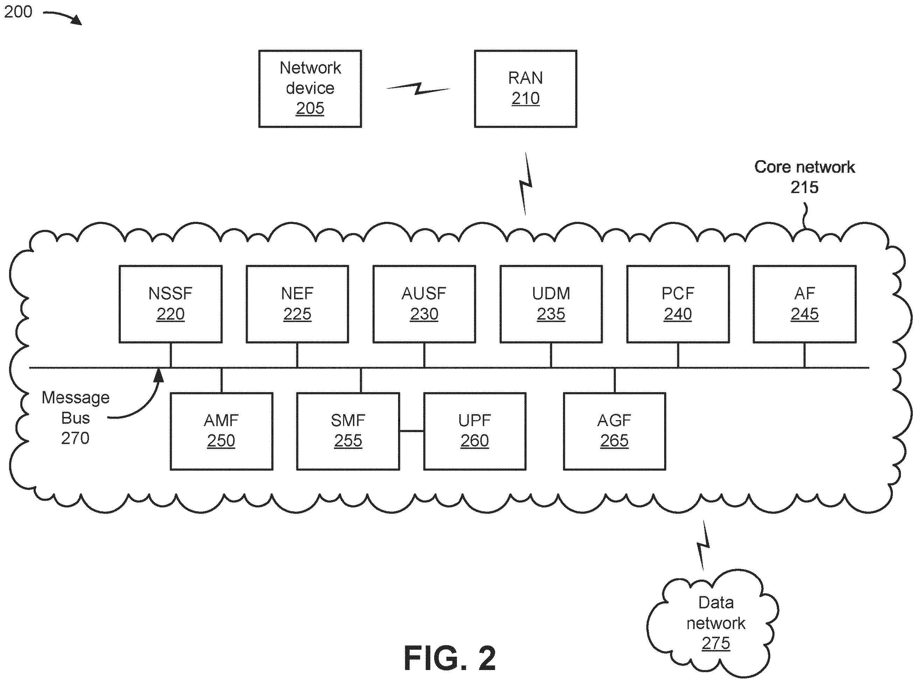

Fig. 2 is a diagram of an example environment 200 in which systems and/or methods described herein may be implemented. As shown in Fig. 2, the example environment 200 may include a network device 205, a RAN 210, a core network 215, and a data network 275. Devices and/or networks of the example environment 200 may interconnect via wired connections, wireless connections, or a combination of wired and wireless connections.

The network device 205 may include one or more devices capable of receiving, processing, storing, routing, and/or providing traffic (e.g., a packet and/or other information or metadata) in a manner described herein. For example, the network device 205 may include a router, such as a label switching router (LSR), a label edge router (LER), an ingress router, an egress router, a provider router (e.g., a provider edge router or a provider core router), a virtual router, or another type of router. Additionally, or alternatively, the network device 205 may include a gateway (e.g., a residential gateway), a switch, a firewall, a hub, a bridge, a reverse proxy, a server (e.g., a proxy server, a cloud server, or a data center server), a load balancer, and/or a similar device. In some implementations, the network device 205 may be a physical device implemented within a housing, such as a chassis. In some implementations, the network device 205 may be a virtual device implemented by one or more computing devices of a cloud computing environment or a data center. In some implementations, a group of network devices 205 may be a group of data center nodes that are used to route traffic flow through a network.

The RAN 210 may support, for example, a cellular radio access technology (RAT). The RAN 210 may include one or more base stations (e.g., base transceiver stations, radio base stations, node Bs, eNodeBs (eNBs), gNodeBs (gNBs), base station subsystems, cellular sites, cellular towers, access points, transmit receive points (TRPs), radio access nodes, macrocell base stations, microcell base stations, picocell base stations, femtocell base stations, or similar types of devices) and other network entities that can support wireless communication for a user equipment (UE). The RAN 210 may transfer traffic between a UE (e.g., using a cellular RAT), one or more base stations (e.g., using a wireless interface or a backhaul interface, such as a wired backhaul interface), and/or the core network 215. The RAN 210 may provide one or more cells that cover geographic areas.

In some implementations, the RAN 210 may perform scheduling and/or resource management for a UE covered by the RAN 210 (e.g., a UE covered by a cell provided by the RAN 210). In some implementations, the RAN 210 may be controlled or coordinated by a network controller, which may perform load balancing, network-level configuration, and/or other operations. The network controller may communicate with the RAN 210 via a wireless or wireline backhaul. In some implementations, the RAN 210 may include a network controller, a self-organizing network (SON) module or component, or a similar module or component. In other words, the RAN 210 may perform network control, scheduling, and/or network management functions (e.g., for uplink, downlink, and/or side link communications of a UE covered by the RAN 210).

In some implementations, the core network 215 may include an example functional architecture in which systems and/or methods described herein may be implemented. For example, the core network 215 may include an example architecture of a 5G next generation (NG) core network included in a 5G wireless telecommunications system. While the example architecture of the core network 215 shown in Fig. 2 may be an example of a service-based architecture, in some implementations, the core network 215 may be implemented as a reference-point architecture and/or a 4G core network, among other examples.

As shown in Fig. 2, the core network 215 may include a number of functional elements. The functional elements may include, for example, a network slice selection function (NSSF) 220, a network exposure function (NEF) 225, an authentication server function (AUSF) 230, a unified data management (UDM) device 235, a policy control function (PCF) 240, an application function (AF) 245, an access and mobility management function (AMF) 250, a session management function (SMF) 255, a user plane function (UPF) 260, and/or an access gateway function (AGF) 265. These functional elements may be communicatively connected via a message bus 270. Each of the functional elements shown in Fig. 2 is implemented on one or more devices associated with a wireless telecommunications system. In some implementations, one or more of the functional elements may be implemented on physical devices, such as an access point, a base station, and/or a gateway. In some implementations, one or more of the functional elements may be implemented on a computing device of a cloud computing environment.

The NSSF 220 includes one or more devices that select network slice instances for a UE. By providing network slicing, the NSSF 220 allows an operator to deploy multiple substantially independent end-to-end networks potentially with the same infrastructure. In some implementations, each slice may be customized for different services.

The NEF 225 includes one or more devices that support exposure of capabilities and/or events in the wireless telecommunications system to help other entities in the wireless telecommunications system discover network services.

The AUSF 230 includes one or more devices that act as an authentication server and support the process of authenticating a UE in the wireless telecommunications system.

The UDM 235 includes one or more devices that store user data and profiles in the wireless telecommunications system. The UDM 235 may be used for fixed access and/or mobile access in the core network 215.

The PCF 240 includes one or more devices that provide a policy framework that incorporates network slicing, roaming, packet processing, and/or mobility management, among other examples.

The AF 245 includes one or more devices that support application influence on traffic routing, access to the NEF 225, and/or policy control, among other examples.

The AMF 250 includes one or more devices that act as a termination point for non-access stratum (NAS) signaling and/or mobility management, among other examples.

The SMF 255 includes one or more devices that support the establishment, modification, and release of communication sessions in the wireless telecommunications system. For example, the SMF 255 may configure traffic steering policies at the UPF 260 and/or may enforce user equipment Internet protocol (IP) address allocation and policies, among other examples.

The UPF 260 includes one or more devices that serve as an anchor point for intraRAT and/or interRAT mobility. The UPF 260 may apply rules to packets, such as rules pertaining to packet routing, traffic reporting, and/or handling user plane QoS, among other examples.

The AGF 265 includes one or more devices that provide authentication, authorization and accounting (AAA) services plus hierarchical traffic shaping and policing for fixed network and 5G residential gateways (e.g., the network device 205) being served from the UPF 260 within the core network 215. The AGF 265 supports shared supporting infrastructure, such as the Internet protocol (IP) multimedia subsystem (IMS) for rich multimedia service delivery.

The message bus 270 represents a communication structure for communication among the functional elements. In other words, the message bus 270 may permit communication between two or more functional elements.

The data network 275 includes one or more wired and/or wireless data networks. For example, the data network 275 may include an IP Multimedia Subsystem (IMS), a public land mobile network (PLMN), a local area network (LAN), a wide area network (WAN), a metropolitan area network (MAN), a private network such as a corporate intranet, an ad hoc network, the Internet, a fiber optic-based network, a cloud computing network, a third-party services network, an operator services network, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the example environment 200 may perform one or more functions described as being performed by another set of devices of the example environment 200.

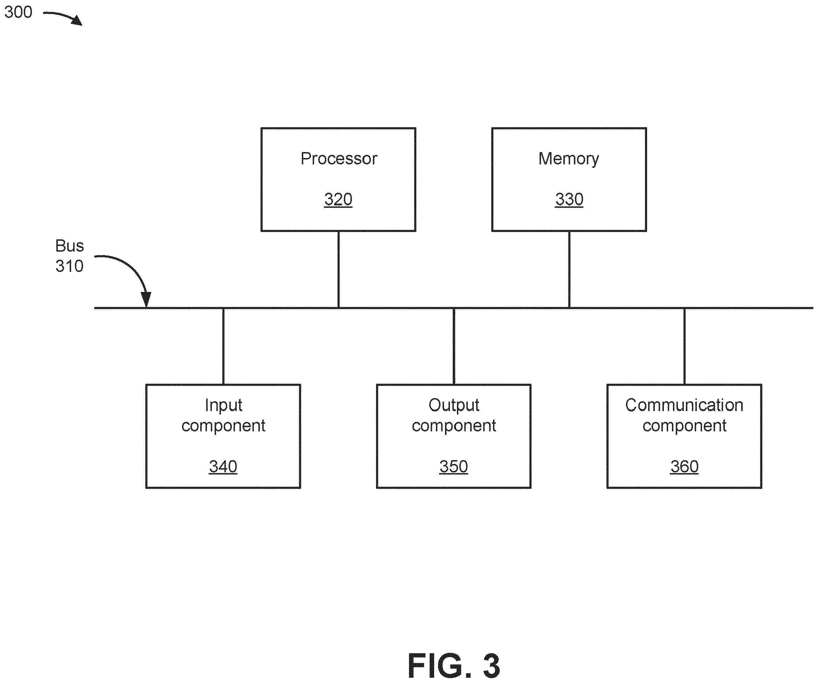

Fig. 3 is a diagram of example components of a device 300, which may correspond to the network device 205, the RAN 210, the NSSF 220, the NEF 225, the AUSF 230, the UDM 235, the PCF 240, the AF 245, the AMF 250, the SMF 255, the UPF 275, and/or the AGF 265. In some implementations, the network device 205, the RAN 210, the NSSF 220, the NEF 225, the AUSF 230, the UDM 235, the PCF 240, the AF 245, the AMF 250, the SMF 255, the UPF 275, and/or the AGF 265 may include one or more devices 300 and/or one or more components of the device 300. As shown in Fig. 3, the device 300 may include a bus 310, a processor 320, a memory 330, an input component 340, an output component 350, and a communication component 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit, a graphics processing unit, a microprocessor, a controller, a microcontroller, a digital signal processor, a field-programmable gate array, an application-specific integrated circuit, and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. Memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

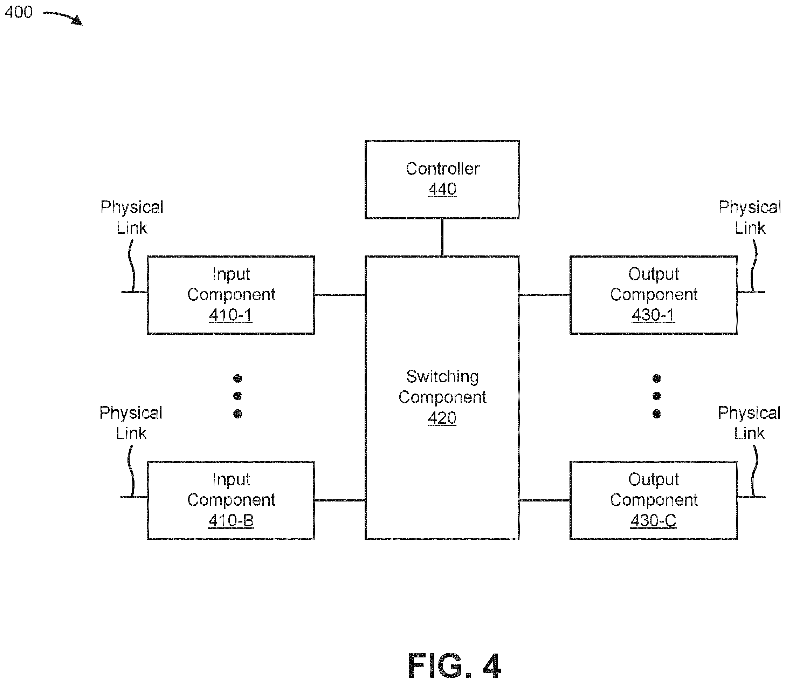

Fig. 4 is a diagram of example components of one or more devices of Fig. 2. The example components may be included in a device 400. The device 400 may correspond to the network device 205. In some implementations, the network device 205 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an accelerated processing unit (APU), a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions stored by a computer-readable medium. A computer-readable medium can include a non-transitory memory device. A memory device includes memory space within a single physical storage device or memory space spread across multiple physical storage devices. Additionally, or alternatively, a computer-readable medium can include transient media such as carrier waves and transmission media.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

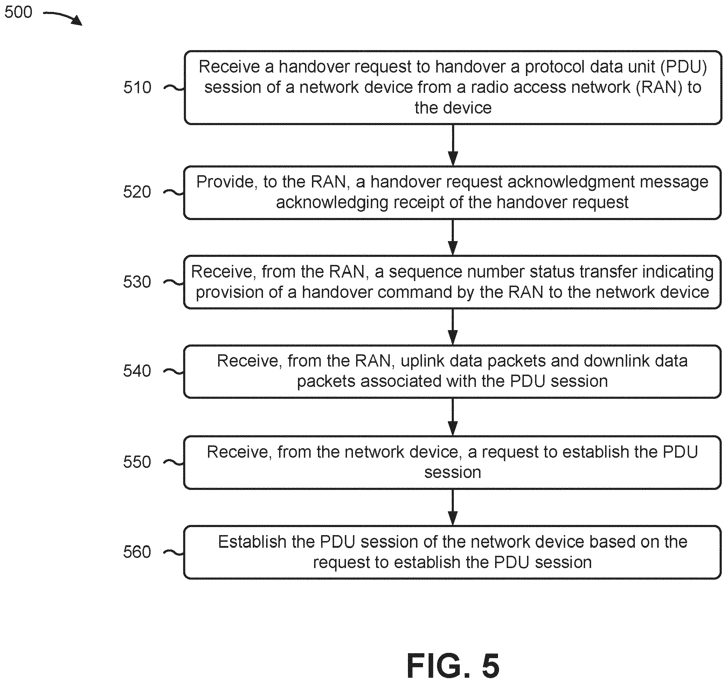

Fig. 5 is a flowchart of an example process 500 for providing seamless handover of a PDU session between a wireless network and a wireline network. In some implementations, one or more process blocks of Fig. 5 may be performed by a device (e.g., the AGF 265). In some implementations, one or more process blocks of Fig. 5 may be performed by another device or a group of devices separate from or including the device, such as a network device (e.g., the network device 205). Additionally, or alternatively, one or more process blocks of Fig. 5 may be performed by one or more components of the device 300, such as the processor 320, the memory 330, the input component 340, the output component 350, and/or the communication component 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include receiving a handover request to handover a PDU session of a network device from a RAN to the device (block 510). For example, the device may receive a handover request to handover a PDU session of a network device from a RAN to the device, as described above. In some implementations, the network device is a dual access residential gateway and the device is an access gateway function. In some implementations, the RAN generates the handover request based on a measurement report received from the network device and a handover decision generated based on the measurement report.

As further shown in Fig. 5, process 500 may include providing, to the RAN, a handover request acknowledgment message acknowledging receipt of the handover request (block 520). For example, the device may provide, to the RAN, a handover request acknowledgment message acknowledging receipt of the handover request, as described above.

As further shown in Fig. 5, process 500 may include receiving, from the RAN, a sequence number status transfer indicating provision of a handover command by the RAN to the network device (block 530). For example, the device may receive, from the RAN, a sequence number status transfer indicating provision of a handover command by the RAN to the network device, as described above.

As further shown in Fig. 5, process 500 may include receiving, from the RAN, uplink data packets and downlink data packets associated with the PDU session (block 540). For example, the device may receive, from the RAN, uplink data packets and downlink data packets associated with the PDU session, as described above.

As further shown in Fig. 5, process 500 may include receiving, from the network device, a request to establish the PDU session (block 550). For example, the device may receive, from the network device, a request to establish the PDU session, as described above.

As further shown in Fig. 5, process 500 may include establishing the PDU session of the network device based on the request to establish the PDU session (block 560). For example, the device may establish the PDU session of the network device based on the request to establish the PDU session, as described above.

In some implementations, process 500 includes receiving, from the network device, a handover complete message indicating that the handover of the PDU session of the network device from the RAN to the device is complete. In some implementations, process 500 includes providing the downlink data packets associated with the PDU session to the network device. In some implementations, process 500 includes providing the uplink data packets associated with the PDU session to a user plane function. In some implementations, process 500 includes enabling additional uplink data packets and additional downlink data packets associated with the PDU session to be exchanged between the network device and a data network, via the device, based on establishing the PDU session.

In some implementations, the device is a first device, the RAN is replaced with a second device, and process 500 includes receiving, from the network device, a handover complete message indicating that the handover of the PDU session of the network device from the second device to the first device is complete; providing the downlink data packets associated with the PDU session to the network device based on receiving the handover complete message; and providing the uplink data packets associated with the PDU session to a UPF based on receiving the handover complete message. In some implementations, process 500 includes enabling additional uplink data packets and additional downlink data packets associated with the PDU session to be exchanged between the network device and a data network, via the first device, based on establishing the PDU session.

In some implementations, the handover request is triggered by the network device. In some implementations, the handover request is triggered by the second device. In some implementations, the network device is a dual access residential gateway, the first device is a backup AGF, and the second device is an active AGF. In some implementations, the second device generates the handover request based on a handover decision.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

To the extent the aforementioned implementations collect, store, or employ personal information of individuals, it should be understood that such information shall be used in accordance with all applicable laws concerning protection of personal information. Additionally, the collection, storage, and use of such information can be subject to consent of the individual to such activity, for example, through well known "opt-in" or "opt-out" processes as can be appropriate for the situation and type of information. Storage and use of personal information can be in an appropriately secure manner reflective of the type of information, for example, through various encryption and anonymization techniques for particularly sensitive information.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Further examples of feature combinations taught by the present disclosure are set out in the following numbered clauses:
1. A method, comprising:
   receiving, by a device, a handover request to handover a protocol data unit (PDU) session of a network device from a radio access network (RAN) to the device;
   providing, by the device and to the RAN, a handover request acknowledgment message acknowledging receipt of the handover request;
   receiving, by the device and from the RAN, a sequence number status transfer indicating provision of a handover command by the RAN to the network device;
   receiving, by the device and from the RAN, uplink data packets and downlink data packets associated with the PDU session;
   receiving, by the device and from the network device, a request to establish the PDU session; and
   establishing, by the device, the PDU session of the network device based on the request to establish the PDU session.
2. The method of clause 1, further comprising:
   receiving, from the network device, a handover complete message indicating that the handover of the PDU session of the network device from the RAN to the device is complete.
3. The method of clause 1 or clause 2, further comprising:
   providing the downlink data packets associated with the PDU session to the network device.
4. The method of any preceding clause, further comprising:
   providing the uplink data packets associated with the PDU session to a user plane function.
5. The method of any preceding clause, further comprising:
   enabling additional uplink data packets and additional downlink data packets associated with the PDU session to be exchanged between the network device and a data network, via the device, based on establishing the PDU session.
6. The method of any preceding clause, wherein the network device is a dual access residential gateway and the device is an access gateway function.
7. The method of any preceding clause, wherein the RAN generates the handover request based on a measurement report received from the network device and a handover decision generated based on the measurement report.
8. A first device, comprising:
   one or more memories; and
   one or more processors to:
      receive a handover request to handover a protocol data unit (PDU) session of a network device from a second device to the first device;
      provide, to the second device, a handover request acknowledgment message acknowledging receipt of the handover request;
      receive, from the second device, a sequence number status transfer indicating provision of a handover command by the second device to the network device;
      receive, from the second device, uplink data packets and downlink data packets associated with the PDU session;
      receive, from the network device, a request to establish the PDU session; and
      establish the PDU session of the network device based on the request to establish the PDU session.
9. The first device of clause 8, wherein the one or more processors are further to:
   receive, from the network device, a handover complete message indicating that the handover of the PDU session of the network device from the second device to the first device is complete;
   provide the downlink data packets associated with the PDU session to the network device based on receiving the handover complete message; and
   provide the uplink data packets associated with the PDU session to a user plane function based on receiving the handover complete message.
10. The first device of clause 8 or clause 9, wherein the one or more processors are further to:
   enable additional uplink data packets and additional downlink data packets associated with the PDU session to be exchanged between the network device and a data network, via the first device, based on establishing the PDU session.
11. The first device of any of clauses 8 to 10, wherein the handover request is triggered by the network device.
12. The first device of any of clauses 8 to 11, wherein the handover request is triggered by the second device.
13. The first device of any of clauses 8 to 12, wherein the network device is a dual access residential gateway, the first device is a backup access gateway function, and the second device is an active access gateway function.
14. The first device of any of clauses 8 to 13, wherein the second device generates the handover request based on a handover decision.
15. A computer-readable medium encoding a set of instructions, the set of instructions comprising:
   one or more instructions that, when executed by one or more processors of a first device, cause the first device to:
   receive a handover request to handover a protocol data unit (PDU) session of a network device from a second device to the first device;
   provide, to the second device, a handover request acknowledgment message acknowledging receipt of the handover request;
   receive, from the second device, a sequence number status transfer indicating provision of a handover command by the second device to the network device;
   receive, from the second device, uplink data packets and downlink data packets associated with the PDU session;
   receive, from the network device, a request to establish the PDU session;
   establish the PDU session of the network device based on the request to establish the PDU session;
   receive, from the network device, a handover complete message indicating that the handover of the PDU session of the network device from the second device to the first device is complete;
   provide the downlink data packets associated with the PDU session to the network device based on receiving the handover complete message; and
   provide the uplink data packets associated with the PDU session to a user plane function based on receiving the handover complete message.
16. The computer-readable medium of clause 15, wherein the one or more instructions further cause the first device to:
   enable additional uplink data packets and additional downlink data packets associated with the PDU session to be exchanged between the network device and a data network, via the first device, based on establishing the PDU session.
17. The computer-readable medium of clause 15 or clause 16, wherein the handover request is triggered by one of the network device or the second device.
18. The computer-readable medium of any of clauses 15 to 17, wherein the first device utilizes one of an Xn application protocol or a next generation application protocol.
19. The computer-readable medium of any of clauses 15 to 18, wherein the network device is a dual access residential gateway, the first device is a backup access gateway function, and the second device is an active access gateway function.
20. The computer-readable medium of any of clauses 15 to 19, wherein the second device generates the handover request based on a handover decision.

## Claims

1. A method, comprising:
receiving, by a device, a handover request to handover a protocol data unit (PDU) session of a network device from a radio access network (RAN) to the device;
providing, by the device and to the RAN, a handover request acknowledgment message acknowledging receipt of the handover request;
receiving, by the device and from the RAN, a sequence number status transfer indicating provision of a handover command by the RAN to the network device;
receiving, by the device and from the RAN, uplink data packets and downlink data packets associated with the PDU session;
receiving, by the device and from the network device, a request to establish the PDU session; and
establishing, by the device, the PDU session of the network device based on the request to establish the PDU session.

2. The method of claim 1, further comprising:
receiving, from the network device, a handover complete message indicating that the handover of the PDU session of the network device from the RAN to the device is complete.

3. The method of claim 1 or claim 2, further comprising:
providing the downlink data packets associated with the PDU session to the network device.

4. The method of any preceding claim, further comprising:
providing the uplink data packets associated with the PDU session to a user plane function.

5. The method of any preceding claim, further comprising:
enabling additional uplink data packets and additional downlink data packets associated with the PDU session to be exchanged between the network device and a data network, via the device, based on establishing the PDU session.

6. The method of any preceding claim, wherein the network device is a dual access residential gateway and the device is an access gateway function.

7. The method of any preceding claim, wherein the RAN generates the handover request based on a measurement report received from the network device and a handover decision generated based on the measurement report.

8. A first device, comprising:
one or more memories; and
one or more processors to:
receive a handover request to handover a protocol data unit (PDU) session of a network device from a second device to the first device;
provide, to the second device, a handover request acknowledgment message acknowledging receipt of the handover request;
receive, from the second device, a sequence number status transfer indicating provision of a handover command by the second device to the network device;
receive, from the second device, uplink data packets and downlink data packets associated with the PDU session;
receive, from the network device, a request to establish the PDU session; and
establish the PDU session of the network device based on the request to establish the PDU session.

9. The first device of claim 8, wherein the one or more processors are further to:
receive, from the network device, a handover complete message indicating that the handover of the PDU session of the network device from the second device to the first device is complete;
provide the downlink data packets associated with the PDU session to the network device based on receiving the handover complete message; and
provide the uplink data packets associated with the PDU session to a user plane function based on receiving the handover complete message.

10. The first device of claim 8 or claim 9, wherein the one or more processors are further to:
enable additional uplink data packets and additional downlink data packets associated with the PDU session to be exchanged between the network device and a data network, via the first device, based on establishing the PDU session.

11. The first device of any of claims 8 to 10, wherein the handover request is triggered by the network device.

12. The first device of any of claims 8 to 11, wherein the handover request is triggered by the second device.

13. The first device of any of claims 8 to 12, wherein the network device is a dual access residential gateway, the first device is a backup access gateway function, and the second device is an active access gateway function.

14. The first device of any of claims 8 to 13, wherein the second device generates the handover request based on a handover decision.

15. A computer-readable medium comprising instructions which, when executed by a computer, cause the computer to carry out the method of any of claims 1 to 7.
